# EUROPÄISCHE PATENTSCHRIFT

(11) **EP 0 825 500 B1**
(45) Veröffentlichungstag und Bekanntmachung des Hinweises auf die Patenterteilung: **23.08.2000**
(21) Anmeldenummer: 97113832.6
(22) Anmeldetag: 11.08.1997
(51) Int. Cl.: G04G 15/00

(54) **Verfahren zum Terminieren technischer Vorgänge und Vorrichtung zur Durchführung des Verfahrens**
Method for scheduling of technical events and apparatus to realise said method
Méthode pour planifier des événements techniques et dispositif pour réaliser cette méthode

(30) Priorität: 17.08.1996 DE 19633159
(43) Veröffentlichungstag der Anmeldung: 25.02.1998
(73) Patentinhaber: ABB PATENT GmbH, 68309 Mannheim (DE)
(72) Erfinder: Koepernik, Jochen, 06369 Schortewitz (DE); Brückner, Michael, 01069 Dresden (DE)
(74) Vertreter: Rupprecht, Klaus, Dipl.-Ing.

(56) Entgegenhaltungen:
- EP-A- 0 447 849
- US-A- 4 147 961
- US-A- 4 213 062
- US-A- 4 237 377
- US-A- 4 587 417

## Beschreibung

Die Erfindung betrifft ein Verfahren zum Bestimmen mindestens eines an der Uhrzeit orientierten Zeitpunktes zum Terminieren technischer Vorgänge nach dem Oberbegriff des Anspruchs 1 und eine Vorrichtung zur Durchführung des Verfahrens nach dem Oberbegriff des Anspruchs 15.

Zum Terminieren technischer Vorgänge, insbesondere zum uhrzeitgerechten elektrischen Schalten, verwendet man im allgemeinen hochgenaue mechanische oder elektrische Zeitschaltuhren, die dementsprechend teuer sind (EP-A-0 447 849). Nun gibt es aber eine ganze Reihe technischer Vorgänge, die zwar terminiert sind, bei denen aber die Zeitgenauigkeit eine absolut untergeordnete Rolle spielt. Hierbei sei besonders an automatische Lichtschalter gedacht, die bei Beginn der Nachtruhe eine Schaufenster- oder Hof- oder Arbeitsraumbeleuchtung abschalten sollen. Hier spielt es keine Rolle, ob das Abschalten pünklich z.B. um 11.00 Uhr oder 10 Minuten später erfolgt. Das gleiche gilt für zeitgesteuerte Lichtschaltungen, die potentiellen Einbrechern die Anwesenheit von Personen vortäuschen sollen. Gewisse Zeitschwankungen sind dabei sogar vorteilhaft, weil sie die Täuschung schwerer erkennbar machen.

Aufgabe der Erfindung ist es deshalb, ein Verfahren und eine Vorrichtung zur Durchführung dieses Verfahrens zu schaffen, mit denen es gelingt ohne, Inanspruchnahme üblicher zeitgenauer Uhrwerke oder einen Funkuhrempfänger auf einfache Weise die Terminierung bestimmter technischer Vorgänge, insbesondere das Schalten elektrischer Funktionseinheiten, zu ermöglichen.

Diese Aufgabe wird durch die in den Ansprüchen 1 und 15 gekennzeichneten Merkmale gelöst. Zweckmäßige Ausgestaltungen und Weiterbildungen des Erfindungsgegenstandes sind in den Unteransprüchen genannt.

Durch das Erfassen der Tag/Nacht- und Nacht/Tag-Wechsel an mindestens einem Kalendertag, wird ein Messen der aktuellen Tages- und/oder Nacht-Länge ermöglicht, da sich diese aus den Zeitabständen zwischen den beiden Wechseln ergibt. Mit der ermittelten aktuellen Tages- und/oder Nacht-Länge ist man im Besitz einer Größe, aus der sich die effektive Jahreszeit bestimmen läßt, der dieser Tag zuzuordnen ist. Zunächt kann hierbei zwar nicht zwischen Frühling und Herbst unterschieden werden, aber das ist zur Bestimmung der Tageszeit auch belanglos, da die hier angesprochenen Pendants etwa gleiche Sonnenauf- und Sonnenuntergangszeiten aufweisen. Die ermittelten Tag/Nacht- und Nacht/Tag-Wechsel lassen sich auf diese Weise zeitlich definieren, so daß ausgehend von ihnen auch ein beliebiger anderer Zeitpunkt definiert werden kann, sofern die als Differenz dazwischenliegende Zeitspanne mit hinreichender Genauigkeit gemessen werden kann. Hierzu eignet sich schon ein einfacher Zähler. Das erfindungsgemäße Verfahren ist somit leicht zu realisieren.

Bestimmte Schwankungen der Helligkeit, wie sie z. B. bei einem Gewitter auftreten, täuschen bisweilen einen Tag/Nacht-Wechsel vor. Eine zweckmäßige Weiterbildung des Erfindungsgegenstandes sieht deshalb vor, daß die jeweils gemessene Tages- und/oder Nacht-Länge vor ihrer weiteren Auswertung einer Plausibilitätsprüfung unterzogen wird. Die erforderliche Plausibilität ist z. B. dann nicht gegeben, wenn die Nacht (in Wirklichkeit das Gewitter) nur eine Stunde dauert.

Weiterhin ist klar, daß sich das Wetter auf die gemessene Tages- und/oder Nacht-Länge auswirken kann. Um daraus resultierende Zeitverschiebungen zu minimieren, ist in Weiterbildung des Erfindungsgegenstandes vorgesehen, daß die Tages- und/oder Nacht-Länge an zwei oder mehr aufeinanderfolgenden Tagen gemessen wird und daraus eine mittlere Tages- und/oder Nacht-Länge berechnet wird. Hierdurch werden verfälschte Meßergebnisse schnell unterdrückt und eine relativ genaue Zeitermittlung ermöglicht.

Von Vorteil kann es sein, wenn an zwei oder mehr aufeinanderfolgenden Tagen die Tageslänge gemessen wird und daraus die Tendenz länger oder kürzer werdender Tage ermittelt wird. Denn nun ist es möglich, unter Berücksichtigung der ermittelten Tageslängentendenz eine um den jeweiligen Zuwachs oder die Abnahme bereinigte, mittlere Tages- und/oder Nacht-Länge zu berechnen.

Eine besonders häufige technische Aufgabe besteht darin, daß Schaltfunktionen termingerecht ausgelöst werden müssen. Es ist deshalb vorgesehen, daß mit Hilfe mindestens eines zeitlich definierten Tag/Nacht- und/oder Nacht/Tag-Wechsels und/oder mindestens eines hierauf bezogenen Zeitwertes mindestens eine elektrische Funktionseinheit zu einem oder mehreren vorgegebenen Zeitpunkten geschaltet wird.

Es ist relativ einfach zu einer bestimmten Tageszeit eine Schaltfunktion auszulösen. Hierzu wird ein definierter Startzeitpunkt gewählt und die Zeitspanne bis zum Auslösen der Schaltfunktion berechnet. Die Berechnung erfolgt mit Hilfe eines Progamms, das die sich aus der Tageszeitlänge ergebenden Sonnenauf- und Sonnenuntergangszeiten berücksichtigt. Das Programm kann dabei eine Rechenfunktion und/oder eine in einem Speicher abgelegte Wertereihe beinhalten.

Bei vielen Anwendungen wird man sich damit begnügen, schon bei der Herstellung eines zeitgesteuerten Schalters bestimmte Schaltzeiten vorzugeben. Bisweilen kann es jedoch sehr vorteilhaft sein, wenn es dem Anwender ermöglicht ist , den Zeitpunkt, an dem eine Schaltfunktion ausgelöst werden soll, selbst einzustellen und wenn dann die vom Startzeitpunkt ausgehende jahreszeitlich variable Zeitspanne automatisch an den eingestellten Zeitpunkt anpaßt wird.

Sofern die Absicht besteht die ermittelten Zeitpunkte anzuzeigen oder dem Anwender eine zeitgerechte Vorgabe ermöglicht werden soll, ist es erforderlich, daß mit Hilfe der gemessenen Tages- und/oder Nacht-Länge und der an diesen Tagen bekannten jahreszeitlich bedingten Sonnenauf- und Sonnenuntergangszeiten die ungefähre Uhrzeit der Tag/Nacht- und Nacht/Tag-Wechsel und/oder hierauf bezogener Zeitpunkte berechnet wird.

Falls sich geplante Zeitvorgaben nicht nur auf den Zeitraum eines Tages beschränken, so ist ggf. auch das Datum von Interesse. Ein erster Schritt zu seiner Erfassung besteht darin, daß die gemessene Tages- und/oder Nacht-Länge mit den bekannten, jahreszeitlich bedingten Tages- und/oder Nacht-Längen verglichen wird und die beiden Kalendertage eines Jahres ermittelt werden, die dem Vergleichswert am nächsten kommen.

In einem zweiten Schritt ist vorgesehen, daß mit Hilfe der ermittelten Tendenz zu längeren oder kürzeren Tageslängen von den zwei ermittelten Jahrestagen gleicher Länge der Tag ausgewählt wird, der aufgrund der ermittelten Tendenz der richtige Tag ist. Nun kann das ungefähre Datum dieses Tages für weitere technische Vorgänge, insbesondere zum Terminieren von elektrischen Schaltfunktionen, bereitgestellt werden.

Zur uhrzeitabhängigen Terminierung ist es erforderlich, daß die ermittelten Zeitpunkte, die in etwa die Uhrzeit wiedergeben sollen, mit Hilfe des gefundenen Datums der betroffenen Tage entsprechend der Sommer- oder Winterzeit angepaßt werden. Dies ist jedoch nur im Rahmen der Genauigkeit möglich, mit der sich das Datum des aktuellen Tages aus der Tageszeitlänge bestimmen läßt.

Entscheidend ist jedoch, daß es mit Hilfe der beschriebenen Verfahrensschritte gelingt, wie mit herkömmlichen Zeitschaltuhren, allerdings mit geringerer Genauigkeit, Schaltfunktionen auszulösen, die sich auf eine etwa der Uhrzeit entsprechende Tageszeit und/oder auf einen etwa dem richtigen Datum entsprechenden Jahrestag beziehen.

Um eine zur Durchführung des Verfahrens geeignete Vorrichtung zu schaffen, werden nur relativ einfache technische Mittel benötigt. Ein Hell/Dunkel-Entscheider, dem ein lichtempfindlicher Sensor vorgeschaltet ist, dient dazu an mindestens einem Kalendertag den Tag/Nacht- und Nacht/Tag-Wechsel zu erfassen. Ein Zeitmesser, vorzugsweise ein elektronischer Zähler, mißt die Zeitabstände zwischen den Tag/Nacht- und Nacht/Tag-Wechseln und damit die aktuelle Tages- und/oder Nacht-Länge. Weiterhin ist eine Logikeinheit vorgesehen die eine mathematische Funktion oder eine Wertereihe verwendet, die es ihr erlaubt entsprechend den bekannten jahreszeitlich bedingten Sonnenauf- und Sonnenuntergangszeiten bestimmte Zeitpunkte zeitlich zu definieren.

Auch die weiteren Verfahrensschritte lassen sich, wie man den entsprechenden Unteransprüchen entnehmen kann, mit Hilfe geeigneter Speicher und Filter und anderer Funktionseinheiten der Vorrichtung realisieren. Dabei ist zu berücksichtigen, daß sich beim Aufbau der Vorrichtung eine Vielzahl von Lösungsmöglichkeiten anbietet. Viele Funktionen lassen sich zudem sowohl soft- als auch hardwaremäßig umsetzen. Als Logikeinheit kann selbstverständlich auch ein Mikroprozessor verwendet werden.

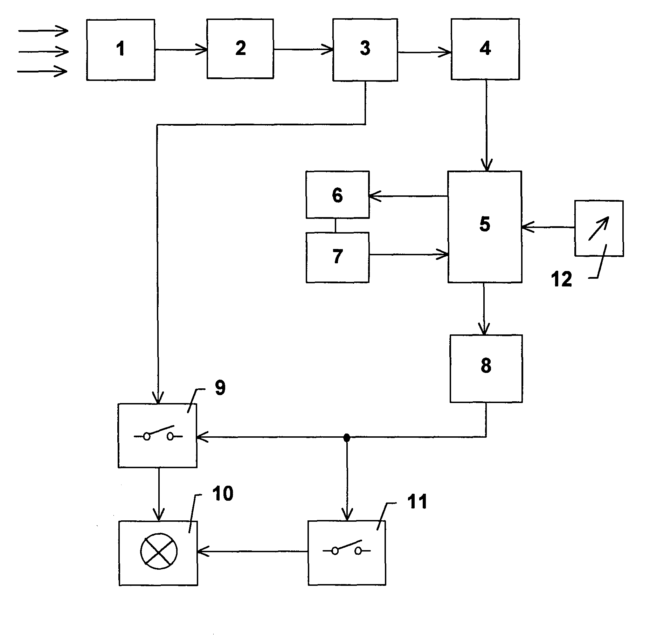

Ein Ausführungsbeispiel der Erfindung ist in der Zeichnung dargestellt und wird im folgenden näher beschrieben. Das Blockschaltbild zeigt verschiedene Funktionseinheiten der erfindungsgemäßen Vorrichtung, die zum großen Teil durch Software-Elemente realisiert werden. Zur besseren Verständlichkeit geht die Beschreibung jedoch von einer aus Hardware-Elementen aufgebauten Vorrichtung aus.

Die zu beschreibende Vorrichtung ist ein Dämmerungsschalter, der beim Tag/Nacht-Wechsel eine Dauerbeleuchtung einschalten und zu vorgerückter Stunde, also bei Beginn der Nachtruhe, wieder ausschalten soll. Hierzu ist ein lichtempfindlicher Sensor 1 vorgesehen, der ein von der Helligkeit im Tagesablauf abhängiges elektrisches Signal erzeugt. Ein nachgeschaltetes Kurzzeitfilter 2 hat die Aufgabe kurzzeitige Schwankungen der Helligkeit, wie sie z. B.durch Autoscheinwerfer oder vorbeiziehende Wolken erzeugt werden, zu unterdrücken. Ein als Grenzwertschalter aufgebauter Hell/Dunkel-Entscheider 3 bewertet das vom lichtempfindlichen Sensor 1 kommende elektrische Signal. Wird ein vorgegebener Grenzwert überschritten, so handelt es sich um einen Nacht/Tag-Wechsel, während das Unterschreiten dieses Grenzwertes einen Tag/Nacht-Wechsel signalisiert. Es kann auch mit einem Zeitfenster gearbeitet werden, das im Bereich der Wechsel das Erfassen einer Helligkeitszu- oder -abnahme erlaubt.

Mit einem als Zeitmesser 4 arbeitenden Zähler wird der zeitliche Abstand zwischen dem Nacht/Tag- und Tag/Nacht-Wechsel gemessen. Eine Logikeinheit 5 unterzieht den gemessenen Wert einer Plausibilitätsprüfung, um eindeutig zu groß oder zu klein ausgefallene Meßergebnisse auszuscheiden. Wegen der witterungsbedingten Helligkeitsschwankungen wäre es leichtfertig sich auf den Meßwert nur eines Tages zu verlassen. Es ist deshalb ein Wertespeicher 6 vorgesehen, in dem die Meßwerte mehrerer aufeinanderfolgender Tage festgehalten werden. Mit Hilfe eines Mehrtagesfilters 7 wird aus diesen Werten ein Mittelwert gebildet, der dann die aktuelle Tages- oder Nachtlänge ergibt.

Der so ermittelte Wert der Tages- und/oder Nacht-Länge wird von der Logikeinheit 5 ausgewertet. Hierzu steht ihr eine gespeicherte Wertereihe oder eine geeignete mathematische Funktion zur Verfügung, mit der über die Tag/Nacht-Länge die jahreszeitabhängige Sonnenauf- und/oder -untergangszeit des jeweiligen Tages definiert wird.

Ist der Zeitpunkt des Sonnenuntergangs bekannt, so weiß man auch, wie groß die von ihm ausgehende Zeitspanne sein muß, um ein eingeschaltetes Dauerlicht bei Beginn der Nachtruhe, z. B. um 23.00 Uhr wieder auszuschalten. Es kann also von vornherein eine vom Datum bzw. der Jahreszeit abhängige Wertereihe festgelegt werden, deren Einzelwerte jeweils die richtige Zeitspanne repräsentieren. Ein Zähler 8 sorgt für die richtige Dauer der vorgegebenen Zeitspanne. Zähler 8 und Hell/Dunkel-Entscheider 3 wirken derart auf einen Lichtschalter 9, daß beim Tag/Nacht-Wechsel der Lichtschalter 9 vom Hell/Dunkel-Entscheider 3 eingeschaltet wird und um etwa 23.00 Uhr vom Zähler 8 wieder abgeschaltet wird.

Der beschriebene Dämmerungsschalter kann auf vorteilhafte Weise mit einem Bewegungsmelder 11 kombiniert werden und diesen gleichzeitig mit dem Abschalten des Dauerlichts aktivieren. Der Bewegungsmelder 11 kann nun das Licht auch nach 23.00 Uhr wieder einschalten, sobald und solange es benötigt wird.

### Bezugszeichenliste

- 1: lichtempfindlicher Sensor (1)
- 2: Kurzzeitfilter (2)
- 3: Hell/Dunkel-Entscheider (3)
- 4: Zeitmesser (4)
- 5: Logikeinheit (5)
- 6: Wertespeicher (6)
- 7: Mehrtagesfilter (7)
- 8: Zähler (8)
- 9: Schalter (9)
- 10: Lichtquelle (11)
- 11: Bewegungsmelder (11)

## Patentansprüche

1. Verfahren zum Bestimmen mindestens eines an der Uhrzeit orientierten Zeitpunktes zum Terminieren technischer Aufgaben, gekennzeichnet durch folgende Verfahrensschritte:
- Erfassen der Tag/Nacht- und Nacht/Tag-Wechsel an mindestens einem Kalendertag,
- Messen der Tages- und/oder Nacht-Länge durch Messen der Zeitabstände zwischen den Tag/Nacht- und Nacht/Tag-Wechseln,
- zeitliches Definieren mindestens eines Tag/Nacht- und/oder Nacht/Tag-Wechsels oder mindestens eines hiervon abgeleiteten Zeitpunktes, wobei das zeitliche Definieren mit Hilfe der bekannten jahreszeitlich bedingten Sonnenauf- und Sonnenuntergangszeiten durchgeführt wird, die mit der jeweiligen Tages- und/oder Nacht-Länge korrelieren.

2. Verfahren nach Anspruch 1, dadurch gekennzeichnet, daß die jeweils gemessene Tages- und/oder Nacht-Länge vor einer weiteren Auswertung des Meßwertes einer Plausibilitätsprüfung unterzogen wird.

3. Verfahren nach einem der vorhergehenden Ansprüche, dadurch gekennzeichnet, daß an zwei oder mehr aufeinanderfolgenden Tagen die Tages- und/oder Nacht-Länge gemessen wird und daraus eine mittlere Tages- und/oder Nacht-Länge berechnet wird.

4. Verfahren nach einem der vorhergehenden Ansprüche, dadurch gekennzeichnet, daß an zwei oder mehr aufeinanderfolgenden Tagen die Tageslänge gemessen wird und daraus die Tendenz länger oder kürzer werdender Tage ermittelt wird.

5. Verfahren nach den vorhergehenden Ansprüche 3 und 4, dadurch gekennzeichnet, daß unter Berücksichtigung der ermittelten Tageslängentendenz eine um den jeweiligen Zuwachs oder die Abnahme bereinigte, mittlere Tages- und/oder Nacht-Länge berechnet wird.

6. Verfahren nach Anspruch 1, dadurch gekennzeichnet, daß zur Unterscheidung von Tages- und Nachtzeiten (zwischen einem Überschreiten und einem Unterschreiten der Belichtung des Sensors unterschieden wird, vorzugsweise ) mit einem Zeitfensters gearbeitet wird, in dem eine Zu- oder Abnahme der Helligkeit ermittelt wird.

7. Verfahren nach einem der vorhergehenden Ansprüche, dadurch gekennzeichnet, daß mit Hilfe mindestens eines zeitlich definierten Tag/Nacht- und/oder Nacht/Tag-Wechsels und/oder mindestens eines hierauf bezogenen Zeitwertes mindestens eine elektrische Funktionseinheit zu einem oder mehreren vorgegebenen Zeitpunkten geschaltet wird.

8. Verfahren nach Anspruch 7, dadurch gekennzeichnet, daß für jeden durch seine Länge definierten Tag eine bestimmte von einem Startzeitpunkt ausgehende Zeitspanne bis zum Auslösen einer Schaltfunktion durch ein entsprechendes Progamm vorgegebenen wird, wobei das Programm eine Rechenfunktion und/oder eine in einem Speicher abgelegte Wertereihe beinhaltet.

9. Verfahren nach Anspruch 8, dadurch gekennzeichnet, daß der Zeitpunkt, an dem eine Schaltfunktion ausgelöst werden soll, einstellbar gemacht wird und die vom Startzeitpunkt ausgehende Zeitspanne automatisch an den eingestellten Zeitpunkt angepaßt wird.

10. Verfahren nach einem der vorhergehenden Ansprüche, dadurch gekennzeichnet, daß mit Hilfe der gemessenen Tages- und/oder Nacht-Länge und der an diesen Tagen bekannten jahreszeitlich bedingten Sonnenauf- und Sonnenuntergangszeiten die ungefähre Uhrzeit der Tag/Nacht- und Nacht/Tag-Wechsel und/oder hierauf bezogener Zeitpunkte berechnet wird.

11. Verfahren nach einem der vorhergehenden Ansprüche, dadurch gekennzeichnet, daß die gemessene Tages- und/oder Nacht-Länge mit den bekannten, jahreszeitlich bedingten Tages- und/oder Nacht-Längen verglichen wird und die beiden Kalendertage eines Jahres ermittelt werden, die dem Vergleichswert am nächsten kommen.

12. Verfahren nach Anspruch 11, dadurch gekennzeichnet, daß mit Hilfe der ermittelten Tendenz zu längeren oder kürzeren Tageslängen von den zwei ermittelten Jahrestagen gleicher Länge der Tag ausgewählt wird, der aufgrund der ermittelten Tendenz der richtige Tag ist, und daß das ungefähre Datum dieses Tages für weitere technische Aufgaben, insbesondere zum Terminieren von elektrischen Schaltfunktionen bereitgestellt wird.

13. Verfahren nach einem der Ansprüche 10 bis 12, dadurch gekennzeichnet, daß die ermittelten Zeitpunkte, die in etwa die Uhrzeit wiedergeben sollen, mit Hilfe des gefundenen Datums der betroffenen Tage entsprechend der Sommer- oder Winterzeit angepaßt werden.

14. Verfahren nach einem der vorhergehenden Ansprüche, dadurch gekennzeichnet, daß zum Auslösen von Schaltfunktionen mindestens ein Zeitpunkt eingestellt wird, der sich auf eine etwa der Uhrzeit entsprechende Tageszeit und/oder auf einen etwa dem richtigen Datum entsprechenden Jahrestag bezieht.

15. Vorrichtung zur Durchführung des Verfahrens nach einem der vorhergehenden Ansprüche, dadurch gekennzeichnet, daß ein lichtempfindlicher Sensor (1) vorgesehen ist, der dazu dient, an mindestens einem Kalendertag den Tag/Nacht- und Nacht/Tag-Wechsel zu erfassen und ein Zeitmesser (4), vorzugsweise ein elektronischer Zähler, die Zeitabstände zwischen den Tag/Nacht- und Nacht/Tag-Wechseln und damit die aktuelle Tages- und/oder Nacht-Länge mißt. und daß eine Logikeinheit (5) eine mathematische Funktion oder eine Wertereihe bereitstellt, die es ihr erlaubt mit Hilfe der bekannten jahreszeitlich bedingten Sonnenauf- und Sonnenuntergangszeiten, die ihrerseits mit der jeweiligenTages- und/oder Nacht-Länge korrelieren, mindestens einen Tag/Nacht- und/oder Nacht/Tag-Wechsel oder mindestens einen hiervon abgeleiteten Zeitpunkt zeitlich zu definieren.

16. Vorrichtung nach Anspruch 15, dadurch gekennzeichnet, daß die Logikeinheit (5) die jeweils gemessene Tages- und/oder Nacht-Länge einer Plausibilitätsprüfung unterzieht, bevor sie diese für eine weitere Auswertung bereitstellt.

17. Vorrichtung nach einem der vorhergehenden Ansprüche 15 oder 16, dadurch gekennzeichnet, daß ein Wertespeicher (6) vorgesehen ist, der die an zwei oder mehr aufeinanderfolgenden Tagen gemessenen Werte der Tages- und/oder Nacht-Länge speichert und daß die Logikeinheit (5) unter Einsatz eines geeigneten Mehrtagesfilter (7) daraus eine mittlere Tages- und/oder Nacht-Länge berechnet und ggf.auch die Tendenz länger oder kürzer werdender Tage ermittelt und unter Berücksichtigung der ermittelten Tageslängentendenz eine um den jeweiligen Zuwachs oder die Abnahme bereinigte, mittlere Tages- und/oder Nacht-Länge berechnet.

18. Vorrichtung nach einem der vorhergehenden Ansprüche 15 bis 17, dadurch gekennzeichnet, daß sie ein elektrisches Schalten zu einem oder mehreren vorgegebenen Zeitpunkten ermöglicht.

19. Vorrichtung nach einem der vorhergehenden Ansprüche 15 bis 18, dadurch gekennzeichnet, daß die Logikeinheit (5) eine mathematische Funktion oder eine in einem Speicher abgelegte Wertereihe bereitstellt, die so ausgelegt ist, daß für jeden durch seine Länge definierten Kalendertag eine bestimmte von einem Startzeitpunkt ausgehende Zeitspanne bis zum Auslösen einer Schaltfunktion vorgegeben ist.

20. Vorrichtung nach einem der vorhergehenden Ansprüche 15 bis 19, dadurch gekennzeichnet, daß mindestens ein Stellelement (8) vorgesehen ist, mit dessen Hilfe der Zeitpunkt, an dem eine Schaltfunktion ausgelöst werden soll, verändert werden kann und die Logikeinheit (5) dafür sorgt, daß die vom Startzeitpunkt ausgehende Zeitspanne automatisch an den eingestellten Zeitpunkt anpaßt wird.

21. Vorrichtung nach einem der vorhergehenden Ansprüche 15 bis 20, dadurch gekennzeichnet, daß die Logikeinheit (5) so aufgebaut oder programmiert ist, daß sie mit Hilfe der ermittelten Daten der Tag/Nacht- und Nacht/Tag-Wechsel und der Tages- und/oder Nacht-Länge fakultativ die ungefähre Uhrzeit der Tag/Nacht- und Nacht/Tag-Wechsel und/oder hierauf bezogener Zeitpunkte berechnet und ggf. an die jeweilige Sommer- oder Winterzeit anpaßt, und/oder daß sie das ungefähre Datum eines bestimmten Tages ermittelt.

22. Vorrichtung nach einem der vorhergehenden Ansprüche 15 bis 19, dadurch gekennzeichnet, daß diese als einstellbarer Zeitschalter aufgebaut ist, der sich zum Auslösen von Schaltfunktionen eignet und mit dem mindestens ein Zeitpunkt eingestellt werden kann, der sich auf eine etwa der Uhrzeit entsprechende Tageszeit und/oder auf einen etwa dem richtigen Datum entsprechenden Jahrestag bezieht.

23. Vorrichtung nach einem der vorhergehenden Ansprüche 15 bis 22, dadurch gekennzeichnet, daß sie mit einem Bewegungsmelder zusammen wirkt.

## Claims

1. A method for scheduling at least one point of time based on the clock time for scheduling technical tasks, characterized by the following process steps:
- detection of the changes from day to night and night to day on at least one calendar day;
- measurement of the length of day and/or night by measurement of the time intervals between changes of day to night and night to day;
- time definition of at least one change from day to night and/or night to day, or of at least one point in time derived therefrom, with the time definition being performed with the help of the known times of sunrise and sunset as are caused seasonally and correlate with the respective lengths of day and/or night.

2. A method as claimed in claim 1, characterized in that the respectively measured length of day and/or night is subjected to a plausibility check prior to the further evaluation of the measured value.

3. A method as claimed in one of the preceding claims, characterized in that the length of day and/or night is measured on two or more successive days and a mean length of day and/or night is calculated therefrom.

4. A method as claimed in one of the preceding claims, characterized in that the length of day is measured on two or more successive days and the tendency of days to become shorter or longer is determined therefrom.

5. A method as claimed in one of the preceding claims 3 and 4, characterized in that under consideration of the determined tendency of the length of day a mean length of day and/or night is calculated which is corrected by the respective increase or decrease.

6. A method as claimed in claim 1, characterized in that that for distinguishing between periods of day or night (preferably by distinguishing between any exceeding or falling below the exposure of the sensor) a time window is used in which an increase or decrease of the light intensity is determined.

7. A method as claimed in one of the preceding claims, characterized in that at least one electric functional unit is switched at one or several predetermined points of time with the help of at least one time defined change of day to night and/or night to day and/or at least one time value relating thereto.

8. A method as claimed in claim 7, characterized in that for each day defined by its length a specific time interval is predetermined which commences from a starting time until the initiation of a switching function by a respective program, with the program containing a computational function and/or a series of values stored in a memory.

9. A method as claimed in claim 8, characterized in that the point of time at which a switching function is to be initiated is made adjustable and the time interval commencing from the starting time is adjusted automatically to the set point of time.

10. A method as claimed in one of the preceding claims, characterized in that the approximate time of the change from day to night and night to day and/or points of time relating thereto are calculated with the help of the measured length of day and/or night and the times of sunrise and sunset as are known on such days and are caused seasonally.

11. A method as claimed in one of the preceding claims, characterized in that the measured length of day and/or night is compared with the known lengths of day and/or night as are caused seasonally and the two calendar days of a year are determined which come closest to the comparative value.

12. A method as claimed in claim 11, characterized in that with the help of the determined tendency towards longer or shorter lengths of day the day is selected from the two determined days of the year of equal length which is the correct day as a result of the determined tendency, and that the approximate date of said day is made available for further technical tasks, in particular for scheduling electric switching functions.

13. A method as claimed in one of the claims 10 to 12, characterized in that the determined periods of time which are to approximately reflect the clock time are adjusted to summer time or winter time with the help of the found date of the involved days.

14. A method as claimed in one of the preceding claims, characterized in that for initiating switching functions at least one point of time is set which relates to a time of day corresponding approximately to the clock time and/or to a day of year corresponding approximately to the correct date.

15. An apparatus to perform the method as claimed in one of the preceding claims, characterized in that a light-sensitive sensor (1) is provided which is used to detect the change from day to night and night to day on at least one calendar day and a timer (4), preferably an electronic counter, measures the time intervals between the changes from day to night and night to day and thus the current length of day and/or night, and that a logic unit (5) provides a mathematical function or a series of values which allows the same to make a time definition of at least one change from day to night and/or night to day or at least one point of time derived therefrom with the help of the known times of sunset and sunrise as are caused seasonally, which on their part correlate with the respective lengths of day and/or night.

16. An apparatus as claimed in claim 15, characterized in that the logic unit (5) subjects the respectively measured length of day and/or night to a plausibility check before it makes the same available for further evaluation.

17. An apparatus as claimed in one of the preceding claims 15 or 16, characterized in that a time and data register (6) is provided which stores the values of the length of day and/or night as measured on two or more successive days and that the logic unit (5) calculates therefrom a mean length of day and/or night by using a suitable multi-day filter and optionally also determines the tendency of days becoming shorter or longer and calculates a mean length of day and/or night corrected by the respective increase or decrease under consideration of the determined tendency of length of the day.

18. An apparatus as claimed in one of the preceding claims 15 to 17, characterized in that it allows electric switching at one or several predetermined points of time.

19. An apparatus as claimed in one of the preceding claims 15 to 18, characterized in that the logic unit (5) provides a mathematical function or a series of values stored in a memory which is designed in such a way that for each calendar day defined by its length a specific time interval which commences from a starting time until the initiation of the switching function is predetermined.

20. An apparatus as claimed in one of the preceding claims 15 to 19, characterized in that at least one actuating element (8) is provided which can be used to change the time at which a switching function is to be initiated and the logic unit (5) will ensure that the time interval commencing from the starting time is adjusted automatically to the set point of time.

21. An apparatus as claimed in one of the preceding claims 15 to 20, characterized in that the logic unit (5) is arranged and programmed in such a way that it facultatively calculates the approximate clock time of the change from day to night and night to day and/or any points of time relating thereto with the help of the determined data of the change from day to night and night to day and the length of day and/or night and adjusts the same optionally to the summer or winter time and/or determines the approximate date of a specific day.

22. An apparatus as claimed in one of the preceding claims 15 to 19, characterized in that it is arranged as an adjustable clock-controlled switch which is suitable for initiating switching functions and can be set with at least one time relating to a time of day approximately corresponding to the clock time and/or to a day of year approximately corresponding to the correct date.

23. An apparatus as claimed in one of the preceding claims 15 to 22, characterized in that it cooperates with a motion detector.

## Revendications

1. Procédé pour la détermination d'au moins un instant temporel, orienté sur l'heure, en vue de terminer des tâches techniques, caractérisé par les étapes de procédé suivantes :
détection du passage jour/nuit et du passage nuit/jour d'au moins un jour calendrier,
mesure de la longueur du jour et/ou de la nuit par mesure des écarts temporels entre le passage jour/nuit et le passage nuit/jour,
définition de l'instant d'au moins un passage jour/nuit et/ou un passage nuit/jour ou d'au moins un instant temporel qui en est dérivé, la définition de cet instant étant effectuée à l'aide des instants connus de lever du soleil et de coucher du soleil qui sont imposés par le déroulement de l'année et corrélés à la longueur de chaque jour et/ou de chaque nuit.

2. Procédé selon la revendication 1, caractérisé en ce que la longueur mesurée de chaque jour et/ou de chaque nuit est soumise une évaluation supplémentaire de plausibilité de la valeur mesurée.

3. Procédé selon l'une des revendications précédentes, caractérisé en ce que la longueur du jour et/ou de la nuit est mesurée en deux ou plusieurs jours successifs, et une longueur moyenne du jour et/ou de la nuit est calculée à partir de là.

4. Procédé selon l'un des revendications précédentes, caractérisé en ce que la longueur de jour est mesurée en deux ou plusieurs jours successifs, et la tendance vers l'allongement ou le raccourcissement du jour est déterminée à partir de là.

5. Procédé selon l'une des revendications précédentes 3 et 4, caractérisé en ce qu'une longueur moyenne du jour et/ou de la nuit est calculée en tenant compte de la tendance de la longueur du jour qui a été déterminée et qui est débarrassée de l'augmentation ou de la diminution correspondante.

6. Procédé selon la revendication 1, caractérisé en ce que pour distinguer les heures de jour et les heures de nuit (qui sont distinguées à partir du dépassement vers le haut ou vers le bas de l'éclairement du capteur), on travaille de préférence avec une fenêtre temporelle dans laquelle l'augmentation ou la diminution de la clarté est déterminée.

7. Procédé selon l'une des revendications précédentes, caractérisé en ce qu'à l'aide d'au moins un passage jour/nuit et/ou d'un passage nuit/jour défini dans le temps et/ou d'au moins une valeur de temps qui y est associée, au moins une unité fonctionnelle électrique est branchée en un ou plusieurs instants temporels prédéterminés.

8. Procédé selon la revendication 7, caractérisé en ce que pour chaque jour défini par sa longueur, un laps de temps défini, commençant à un instant temporel de départ et se déroulant jusqu'au déclenchement d'une fonction de commutation, est prédéterminé par un programme approprié, le programme contenant une fonction de calcul et/ou une série de valeurs conservées dans une mémoire.

9. Procédé selon la revendication 8, caractérisé en ce que l'instant temporel auquel une fonction de commutation doit être déclenchée est rendu réglable, et le laps de temps commençant à l'instant temporel de départ est automatiquement adapté à l'instant temporel réglé.

10. Procédé selon l'une des revendications précédentes, caractérisé en ce que l'heure approximative du passage jour/nuit et du passage nuit/jour et/ou d'instants temporels qui y sont associés est calculée à l'aide de la longueur mesurée du jour et/ou de la nuit et des instants, connus pour ce jour et imposés par le déroulement de l'année, du lever du soleil et du coucher du soleil.

11. Procédé selon l'une des revendications précédentes, caractérisé en ce que la longueur mesurée du jour et/ou de la nuit est comparée aux longueurs connues, imposées par le déroulement de l'année, du jour et/ou de la nuit, et les deux jours calendrier d'une année qui sont les plus proches de la valeur de comparaison sont déterminés.

12. Procédé selon la revendication 11, caractérisé en ce que le jour qui, sur base de la tendance déterminée, est le jour correct, est sélectionné à l'aide de la tendance déterminée vers un allongement ou un raccourcissement de la longueur du jour des deux jours de l'année déterminés comme étant de même longueur, et en ce que la date approximative de ce jour est mise à la disposition d'autres tâches techniques, en particulier pour interrompre des fonctions de commutation électrique.

13. Procédé selon l'une des revendications 10 à 12, caractérisé en ce que les instants temporels déterminés qui doivent donner l'heure approximative sont adaptés en fonction de l'heure d'été ou de l'heure d'hiver à l'aide de la date découverte pour le jour concerné.

14. Procédé selon l'une des revendications précédentes, caractérisé en ce qu'au moins un instant temporel qui se rapporte à un moment du jour qui correspond sensiblement à l'heure et/ou à un jour de l'année qui correspond sensiblement à la date correcte est réglé pour le déclenchement de fonctions de commutation.

15. Dispositif en vue de la mise en oeuvre du procédé selon l'une des revendications précédentes, caractérisé en ce qu'il comporte un capteur (1) sensible à la lumière, qui sert à détecter le passage jour/nuit et/ou le passage nuit/jour au moins en un jour calendrier, et un dispositif (4) de mesure du temps, de préférence un compteur électronique, qui mesure les écarts temporels entre le passage jour/nuit et le passage nuit/jour et ainsi la longueur effective du jour et/ou de la nuit, en ce qu'une unité logique (5) prépare une fonction mathématique ou une série de valeurs qui permettent, à l'aide des instants connus, imposés par le déroulement de l'année, du lever du soleil et du coucher du soleil, qui sont pour leur part corrélés à la longueur de chaque jour et/ou de chaque nuit, de définir dans le temps au moins un passage jour/nuit et/ou un passage nuit/jour ou au moins un instant temporel qui en est déduit.

16. Dispositif selon la revendication 15, caractérisé en ce que l'unité logique (5) soumet la longueur mesurée de chaque jour et/ou de chaque nuit à une vérification de plausibilité avant de la mettre à la disposition d'une autre évaluation.

17. Dispositif selon l'une des revendications précédentes 15 ou 16, caractérisé en ce qu'il comporte une mémoire de valeurs (6) qui conserve les valeurs, mesurées en deux ou plusieurs jours successifs, de la longueur du jour et/ou de la nuit, et en ce qu'à partir de ces valeurs et par recours à un filtrage approprié (7) sur plusieurs jours, l'unité logique (5) calcule une longueur moyenne du jour et/ou de la nuit et détermine éventuellement aussi la tendance à l'allongement ou au raccourcissement du jour, et calcule une longueur moyenne du jour et/ou de la nuit, débarrassée de l'augmentation ou de la diminution correspondante, en tenant compte de la tendance de la longueur du jour qui a été déterminée.

18. Dispositif selon l'une des revendications précédentes 15 à 17, caractérisé en ce qu'il permet une commutation électrique en un ou plusieurs instants temporels prédéterminés.

19. Dispositif selon l'une des revendications précédentes 15 à 18, caractérisé en ce que l'unité logique (5) prépare une fonction mathématique ou une série de valeurs conservées dans une mémoire, qui sont conçues de telle sorte que pour chaque jour calendrier défini par sa longueur, un laps de temps défini, qui commence à un instant temporel de départ et qui se déroule jusqu'au déclenchement d'une fonction de commutation, est prédéterminé.

20. Dispositif selon l'une des revendications précédentes 15 à 19, caractérisé en ce qu'il comporte au moins un élément de réglage (8) à l'aide duquel l'instant temporel auquel la fonction de commutation doit être déclenchée peut-être modifié, et l'unité logique (5) assure que le laps de temps commençant à l'instant temporel de départ est automatiquement adapté à un instant temporel réglé.

21. Dispositif selon l'une des revendications précédentes 15 à 20, caractérisé en ce que l'unité logique (5) est conçue ou programmée de telle sorte qu'à l'aide des données du passage jour/nuit et du passage nuit/jour et de la longueur du jour et/ou de la nuit qui ont été déterminées, elle calcule facultativement l'heure approximative du passage jour/nuit et du passage nuit/jour et/ou d'instants temporels associés à ceux-ci, l'adapte à l'heure d'été ou à l'heure d'hiver suivant le cas, et/ou en ce qu'elle détermine la date approximative d'un jour défini.

22. Dispositif selon l'une des revendications précédentes 15 à 19, caractérisé en ce que le dispositif est conçu comme commutateur temporisé réglable qui convient pour le déclenchement de fonctions de commutation et qui permet de régler au moins un instant temporel qui se rapporte à un instant qui correspond sensiblement à l'heure et/ou un jour de l'année qui correspond sensiblement à la date correcte.

23. Dispositif selon l'une des revendications précédentes 15 à 22, caractérisé en ce qu'il coopère avec un détecteur de mouvement.
